# DEMANDE DE BREVET EUROPEEN

(11) **EP 1 783 649 A1**
(43) Date de publication de la demande: **09.05.2007**
(21) Numéro de dépôt: 05109382.1
(22) Date de dépôt: 10.10.2005
(51) Int. Cl.: G06F 21/00

(54) **Microprocesseur sécurisé avec vérification des sauts**

(71) Demandeur: Nagracard S.A., 1033 Cheseaux-sur-Lausanne (CH)
(72) Inventeur: KUDELSKI, André, 1095, Lutry (CH)
(74) Mandataire: Wenger, Joel-Théophile

(57) **Abrégé**

Le but de la présente invention est de proposer une méthode et un dispositif afin de pallier aux dégâts qu'une désynchronisation du compteur de programme peut provoquer.

Ce but est atteint par un microprocesseur sécurisé comprenant un compteur de programme et une interface avec une mémoire de programme contenant des instructions, ce microprocesseur étant caractérisé en ce qu'il comprend une mémoire d'historique du compteur de programme indiquant la position du compteur de programme lors de l'exécution de la précédente instruction, et un module de vérification d'instruction, ce module comprenant des moyens de lecture d'une information de vérification additionnelle définissant pour l'instruction en cours d'exécution, la position supposée du précédent compteur de programme, ce module de vérification comprenant des moyens pour comparer cette information de vérification avec celle provenant de la mémoire d'historique, et des moyens pour générer une erreur si la vérification indique une incompatibilité.

## Description

### Introduction

La présente invention concerne le domaine des microprocesseurs, en particulier le domaine de la sécurisation de l'exécution du code dudit microprocesseur.

### Etat de la technique

II est bien connu qu'une instruction est formée d'un opcode (ou identifiant d'instruction) et de zéro ou plusieurs opérants. Le premier octet d'une instruction ("opcode") joue un rôle important car cela définit la fonction souhaitée. Selon l'instruction, un ou plusieurs octets complémentaires seront nécessaires pour former une instruction.

Selon le type de processeur, la taille d'un opcode peut être de 8, 12, 16 ou 32 bits. Un opcode peut être également temporairement sur une plus grande longueur, par exemple une valeur de 18H pour le premier octet signifie que le deuxième octet définit l'instruction (voir liste d'instructions du 68HC11 par exemple).

Lorsqu'un processeur se désynchronise, par exemple suite à une erreur de programmation ou une perturbation extérieure, il se peut que son compteur de programme (PC) indique une position de la mémoire qui n'est pas un opcode mais un opérant.

| | | | | |
|---|---|---|---|---|
| F091 | 12 2D 78 11 | LF091: | BRSET | L002D,#%01111000, LF0A6 |
| F095 | CE F3 17 | | LDX | #$F317 |
| F098 | 18 1F 00 10 0B | | BRCLR | 0, Y, #%00010000, LF0AC |

Chaque instruction commence par un "opcode" et peut être suivie de plusieurs opérants. Lors du déroulement normal du programme, une instruction est chargée dans l'unité centrale, cette instruction a une longueur variant en fonction du opcode. Ainsi pour une instruction simple (NOP, INCA ...) aucun opérant n'est ajouté alors que pour une instruction plus compliquée (BRCLR) on peut trouver quatre opérants. Le système est très flexible et est basé sur le fait que chaque instruction en suit une autre. A la fin de l'exécution d'une instruction, le code suivant est nécessairement un opcode.

On imagine les dégâts que peut provoquer l'exécution anarchique d'un programme qui débuterait aléatoirement, par exemple suite à des surtensions ou autres parasites.

Selon l'exemple ci-dessus, si le compteur de programme PC est chargé avec l'adresse F093, l'instruction qu'il va exécuter sera celle dont le opcode est 78H soit l'instruction

| | | | |
|---|---|---|---|
| F093 | 78 11 CE | ASL | @$11CEh |
| F096 | F31718 | ADD | @$1718h |
| F099 | 1F 00 10 0B | BRCLR | 0, X, #00010000B, LF0AC |

La suite des codes exécutés est complètement aléatoire et incontrôlable. Les conséquences peuvent être dramatiques, par exemple effacer des données importantes, transmettre des clés de chiffrement.

### Brève description de l'invention

Le but de la présente invention est de proposer une méthode et un dispositif afin de pallier aux dégâts qu'une désynchronisation du compteur de programme peut provoquer.

Ce but est atteint par un microprocesseur sécurisé comprenant un compteur de programme et une interface avec une mémoire de programme contenant des instructions, ce microprocesseur étant caractérisé en ce qu'il comprend une mémoire d'historique du compteur de programme indiquant la position du compteur de programme lors de l'exécution de la précédente instruction, et un module de vérification d'instruction, ce module comprenant des moyens de lecture d'une information de vérification additionnelle définissant pour l'instruction en cours d'exécution, la position supposée du précédent compteur de programme, ce module de vérification comprenant des moyens pour comparer cette information de vérification avec celle provenant de la mémoire d'historique, et des moyens pour générer une erreur si la vérification indique une incompatibilité.

Ce module de vérification est directement implémenté dans le microprocesseur, et agit sur la partie de saisie d'une instruction ("fetch"). Lorsqu'une instruction est lue, l'information de vérification est lue en même temps. Cette information va permettre de déterminer la manière d'atteindre cette instruction est conforme à la pensée du programmeur.

La mémoire d'historique du compteur de programme contient une information sur la provenance dudit compteur avant d'arriver sur l'instruction en cours. Cette indication de provenance peut, dans une forme simplifiée, simplement indiquer si l'instruction précédemment exécutée était l'instruction juste au-dessus de l'instruction en cours (auto-incrément du compteur de programme) ou au contraire, une autre instruction.

### Brève description de la figure

L'invention sera mieux comprise grâce à la description détaillée qui va suivre et qui se réfère au dessin annexé qui est donné à titre d'exemple nullement limitatif, décrivant une mémoire connectée au microprocesseur.

### Description détaillée de l'invention

Dans une exécution normale d'un programme, on peut considérer qu'il existe deux types de situation lors de l'exécution d'une instruction:
- elle est exécutée juste après la précédente
- elle est exécutée suite à un saut

Dans le premier cas, le compteur de programme s'incrémente automatiquement à la fin du traitement de l'instruction précédente. Nous sommes dans un mode continu.

Dans le second cas, le programme compteur est chargé par une valeur provenant de plusieurs sources, par exemple un saut (JMP), un appel de sous-routine (JSR, BSR), un saut conditionnel (BHS, BRA) ou une entrée d'interruption. Les instructions exécutées suite à un saut représente un faible pourcentage du code. C'est pourquoi selon une variante de l'invention, les instructions disposent d'une valeur indiquant dans quelle catégorie elles se trouvent.

Il est à noter qu'une instruction se trouvant dans la deuxième catégorie (saut autorisé) peut également être dans la première catégorie. En effet, lors de boucle par exemple, on peut arriver sur une instruction soit par le saut, soit par l'incrémentation normale du compteur de programme. Dans le cas d'une première instruction de sous-routine, il n'est possible d'atteindre cette instruction que par un saut. L'indicateur de saut peut avoir trois états, soit saut possible, saut interdit, saut obligatoire.

II est donc proposé d'ajouter une indication de vérification pour chaque instruction, cette indication comprenant au moins deux états, (sau possible, saut impossible) et d'ajouter cette information dans le code exécutable.

| | | | | |
|---|---|---|---|---|
| F091 | 112 2D 78 11 | LF091: | BRSET | L002D, #%01111000, LF0A6 |
| F095 | 0CE F3 17 | | LDX | #$F317 |
| F098 | 018 1F 00 10 0B | | BRCLR | 0, Y, #%00010000, LF0AC |
| F09E | 004C | | INCA | |
| F09F | 1AB 12 | LF0AC: | ADD | #12 |

La ligne F09F est typiquement une instruction qui peut être exécutée suite au saut défini à la ligne F098 ou au contraire, suite à l'instruction précédente. Dans un premier mode de réalisation, la valeur de saut sera à 1 pour "saut possible".

Les lignes F095 ou F09E sont au contraire exclusivement exécutée après l'instruction précédente. Un saut à cette adresse est impossible.

Quant à la ligne F091, dans le cas où il s'agirait de l'entrée d'un programme d'interruption, non seulement le saut est possible mais nécessaire. Selon une variante de l'invention, on pourrait placer un 2 au lieu du 1 pour "saut nécessaire".

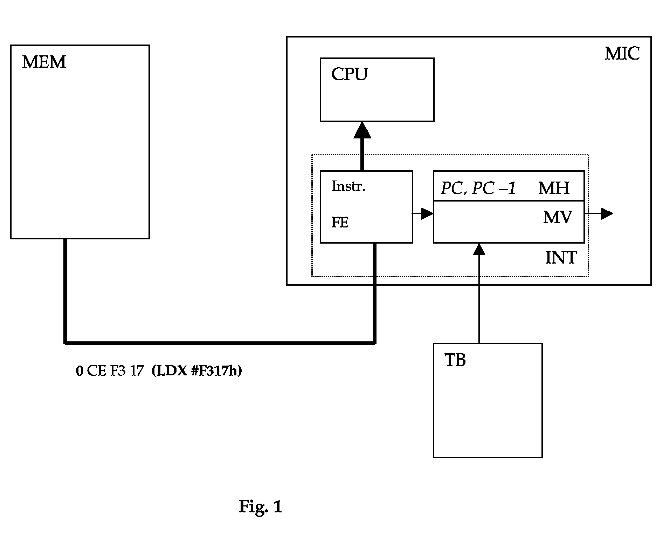

Sur la figure 1, la mémoire de programme MEM va contenir l'ensemble du programme. Il peut s'agir de différent type de support tels que ROM, RAM, Flash. La partie interface INT du processeur MIC va lire les instructions par un module de lecture FE. La mémoire d'historique MH contient le compteur de programme précédent (PC-1) et la valeur courante (PC). Cette dernière deviendra la valeur précédente lors de la prochaine instruction.

Le module de vérification MV extrait (ou reçoit) l'indication de vérification associée à l'instruction en cours et compare cette information avec les données transmises de la mémoire d'historique. Si l'instruction est validée, elle est transmise à l'unité centrale (CPU) pour exécution.

Lors de l'exécution du programme, le contexte d'exécution est également stocké dans la mémoire d'historique MH du compteur de programme à savoir l'information de modification du compteur de programme. Dans une version simplifiée, cette information peut soit être "accès par auto-incrément" ou "accès par saut". Lors de l'appel d'une instruction, l'historique d'exécution est comparé avec l'information de vérification. Si l'historique indique "accès par auto-incrément" et que l'information de vérification est égale à zéro (saut impossible), l'instruction est validée. Si l'historique est égal à "accès par un saut" et que l'information de vérification est égale à 0 (saut impossible), l'instruction est invalidée.

Si l'historique est égal à "accès par un saut" et que l'information de vérification est égale à 1 (saut possible), l'instruction est validée; et si l'historique indique "accès par auto-incrément" et que l'information de vérification est égal à 1 (saut possible), l'instruction est validée (sauf si l'on a adopté le système à trois états et que l'information de vérification est du type "accès par saut nécessaire".

L'ensemble des informations de vérification peuvent être stockées dans une autre mémoire formant ainsi un masque d'exécution. L'information de vérification est lue dans cette mémoire et comparée avec le comportement du microprocesseur.

Selon un mode de réalisation, l'information de vérification peut comprendre une valeur indiquant une plage de saut acceptable.

| | | | | |
|---|---|---|---|---|
| F091 | FF 12 2D 78 11 | LF091: | BRSET | L002D, #%01111000, LF0A6 |
| F095 | 00 CE F3 17 | | | LDX #$F317 |
| F098 | 00 18 1F 00 10 0B | | BRCLR | 0, Y, #%00010000, LF0AC |
| F09E | 00 4C | | INCA | |
| F09F | 08 AB 12 | LF0AC: | ADD | #12 |

Selon notre exemple, l'information de vérification est codée sur 8 bits. Si la valeur est zéro, seule l'exécution de cette instruction à la suite de la précédente est acceptée.

Ceci est le cas pour les lignes F095, F098 et F09E. Pour la ligne F09F, l'information de vérification est égale à 08 c'est-à-dire que la valeur précédente du compteur de programme ne doit pas excéder une différence de 8 par rapport à la valeur courante. On crée ainsi une fenêtre limitant l'accès à cette instruction à une petite plage du code.

Si une instruction peut être atteinte à partir de plusieurs départs, l'information de vérification comprendra la valeur la plus élevée. On peut réserver la valeur maximale, soit FFh, dans notre exemple pour indiquer qu'un saut est autorisé quelque soit la valeur du compteur de programme précédent. Cette situation est le cas pour la ligne F091 qui est l'entrée de la sous-routine formant l'exemple illustré ci-dessus.

Selon un mode plus sophistiqué de l'invention, une table de positions de départ TB est constituée pour chaque instruction acceptant l'arrivée suite à un saut.

Cette table contient toutes les adresses de départ possibles.

**Table F09F**

| | F09F |
|---|---|
| La ligne F09F va contenir l'adresse de départ F098 selon notre exemple. Si d'autres instructions permettent d'accéder à cette ligne, leur adresse de départ seront contenues dans la table. | F098 |
| | ..... |
| | ..... |

| | |
|---|---|
| Lors de l'exécution de la ligne F09F, la première vérification est faite sur la base de l'information de vérification. Si l'arrivée sur cette instruction est suite à un saut, on compare cette information (provenant de la mémoire d'historique) et l'information de vérification (qui peut être un bit dans ce cas). | |

Une fois l'arrivée par saut acceptée, le module de vérification va chercher la table correspondant à l'instruction en cours et comparer la valeur du compteur de programme précédent aux valeurs contenues dans la table. Si la valeur est présente, l'instruction est définitivement acceptée. Sinon, un message d'erreur est généré.

Ces tables sont générées lors de la compilation du programme et peuvent être stockées dans une mémoire différente de la mémoire programme, par exemple une mémoire qui est uniquement accessible au module de vérification.

## Revendications

1. Microprocesseur sécurisé comprenant un compteur de programme (PC) et une interface (INT) avec une mémoire de programme (MEM) contenant des instructions, ce microprocesseur étant **caractérisé en ce qu'**il comprend une mémoire d'historique (MH) du compteur de programme (PC) indiquant la position du compteur de programme lors de l'exécution de la précédente instruction (PC-1), et un module de vérification d'instruction (MV), ce module comprenant des moyens de lecture d'une information de vérification additionnelle définissant pour l'instruction en cours d'exécution, la position supposée du précédent compteur de programme (PC-1), ce module de vérification comprenant des moyens pour comparer cette information de vérification avec celle provenant de la mémoire d'historique (MH), et des moyens pour générer une erreur si la vérification indique une incompatibilité.

2. Microprocesseur sécurisé (MIC) selon la revendication 1, **caractérisé en ce que** l'indication de vérification contient au moins deux états, soit "accès par auto-incrément" ou "accès par saut", et **en ce que** la mémoire d'historique (MH) contient deux états, soit "accès par auto-incrément" ou "accès par saut" sur la base du comportement du compteur de programme (PC) pour arriver à l'instruction en cours, le module de vérification génère une erreur si l'information de vérification indique l'état "accès par auto-incrément", et que la mémoire d'historique indique l'état "accès par saut".

3. Microprocesseur sécurisé (MIC) selon la revendication 1, **caractérisé en ce que** l'indication de vérification contient au moins deux états, soit "accès par auto-incrément" ou "accès par saut", et **en ce que** la mémoire d'historique (MH) contient deux états, soit "accès par auto-incrément" ou "accès par saut" sur la base du comportement du compteur de programme (PC) pour arriver à l'instruction en cours, le module de vérification accepte l'instruction en cours si l'information de vérification indique l'état "accès par saut", et que la mémoire d'historique indique l'état "accès par auto-incrément".

4. Microprocesseur sécurisé (MIC) selon la revendication 1, **caractérisé en ce que** l'indication de vérification contient au moins deux états, soit "accès par auto-incrément" ou "accès par saut", et **en ce que** la mémoire d'historique (MH) contient deux états, soit "accès par auto-incrément" ou "accès par saut" sur la base du comportement du compteur de programme (PC) pour arriver à l'instruction en cours, le module de vérification accepte l'instruction en cours si l'information de vérification indique l'état "accès par saut", et que la mémoire d'historique indique l'état "accès par saut".

5. Microprocesseur sécurisé (MIC) selon les revendications 2 ou 3, **caractérisé en ce que** l'indication de vérification contient trois états, soit "accès par auto-incrément", "accès par saut" ou "accès par saut nécessaire", le module de vérification génère une erreur si l'information de vérification contient l'état "accès par saut nécessaire", et que la mémoire d'historique indique l'état "accès par auto-incrément".

6. Microprocesseur sécurisé (MIC) selon les revendications 1 à 5, **caractérisé en ce que** si l'indication de vérification contient "accès par saut", et que la mémoire d'historique (MH) contient l'état "accès par saut", le module de vérification, préalablement à l'acceptation de l'instruction, comprend des moyens de lecture d'une table (TB) comprenant, pour l'instruction en cours, le ou les compteurs de programme précédents autorisés et vérifie si le compteur de programme précédent (PC-1) contenu dans le module d'historique est présent dans cette liste.
